# EUROPEAN PATENT APPLICATION

(11) **EP 2 891 956 A1**
(43) Date of publication of application: **08.07.2015**
(21) Application number: 12883711.9
(22) Date of filing: 29.11.2012
(51) Int. Cl.: G06F 3/023

(54) **LETTER INPUTTING METHOD, SYSTEM AND DEVICE**

(30) Priority: 29.08.2012 CN 201210314125
(71) Applicant: Baidu Online Network Technology (Beijing) Co., Ltd, Beijing 100085 (CN)
(72) Inventor: LIU, Jingxian, Beijing 100085 (CN)
(74) Representative: Delumeau, François Guy
(86) International application number: PCT/CN2012/085558
(87) International publication number: WO 2014/032370

(57) **Abstract**

The present invention provides a text input method comprising following steps: receiving a text message input by a user; extracting keywords from the text message and displaying the keywords in a special manner; in response to the user's selection of the keyword, entering into a function module in relation to the keyword. Accordingly, the present invention further provides a text input system, which applies the aforementioned text input method. Additionally, the present invention further provides a text input device comprising: an input panel for providing an input area for users; a first display panel for displaying a text message input by a user, wherein the keywords in the text message are displayed in a special manner; a second display panel for displaying a shortcut icon for a function module in relation to a keyword. The use of the method, system and device of the present invention enables users to search for additional information in the input process with much convenience, and significantly improves user experience.

## Description

### CROSS REFERENCE TO RELATED APPLECATIONS

This application claims the benefits of prior Chinese Patent Application No. 201210314125.2, filed on August 29, 2012, titled "A TEXT INPUT METHOD, SYSTEM AND DEVICE", which is incorporated herein by reference in its entirety.

### TECHNICAL FIELD:

The present invention relates to the technical field of text input on a terminal, in particular, a text input method, system and device.

### BACKGROUND

In the process of users inputting text, it usually involves information such as phone number, time, weather, address, hot words in the press, or the like. When inputting such kind of information, users may also want to look for relevant information in more detail. In the prior art, when users want to look for relevant information in the text, they usually have to leave the current input state and then enter into a relevant application in order to do the search. For example, when the text message that a user is to input includes the word 'weather' and the user needs to search for a weather forecast, the user has to leave the current text input state and go back to the home screen and then click on an APP for weather forecast to get into the relevant application in order to search for the weather.

Since it is required to leave the current text input state before one can enter into another application, this consequently makes users unable to get access to the desired information in no time. Besides, after consulting the desired reference information, users have to exit from the current application, and then once again enter into the text input state. The user experience is compromised because of multiple times of complicated operations of exiting from and entering into applications.

At present, some applications are capable of recognizing certain type of special information, for example, website addresses. However, the recognition of special information mainly depends on the recognition function of applications rather than of the input method editor (IME). Because not every application can support recognition of special information, therefore, its applicability is under certain limitation. Meanwhile, the applications that are currently available are only capable of supporting recognition of such special information as website addresses.

Accordingly, it is urgent to put forward a method of extracting keywords from text message input by users and directly entering into other function modules through selection of the keywords, which makes it more convenient for users to get in other function modules to search for information.

### SUMMARY OF THE INVENTION

The present invention provides a text input method, system and device. User experience can be effectively improved by using the method of the present invention.

According to one aspect of the present invention, there provides a text input method, which comprises following steps:
receiving a text message input by a user;
extracting keywords from the text message and displaying the keywords in a special manner; and
in response to the user's selection of the keyword, entering into a function module in relation to the keyword.

According to another aspect of the present invention, there provides a text input system, which comprises:
a receiving module for receiving a text message input by a user;
an extracting module for extracting keywords from the text message and displaying the keywords in a special manner; and
a responding module for responding to the user's selection of the keyword, and entering into a function module in relation to the keyword.

According to another aspect of the present invention, there provides a text input device, which comprises:
an input panel for providing an input area for users;
a first display panel for displaying text message input by users, wherein keywords in the text message are displayed in a special manner; and
a second display panel for displaying a shortcut icon of a function module in relation to the keyword.

The text input method, system and device provided by the present invention are intended to, during the process when a user inputs a text message, extract keywords from the text message and display the keywords in a special manner in order to distinguish the keywords from other words. In case a user needs to search for information relevant to a keyword, the user may enter corresponding application by selecting the keyword displayed in a special manner. After obtaining relevant information, the user may directly exit from the application and return to the text input state, or alternatively, add information obtained from the corresponding application into the text message that has been input. The use of the method of the present invention simplifies steps to be operated by users, enables users to quickly, conveniently obtain information in relation to text input by the users and effectively improves user experience.

### BRIEF DESCRIPTION OF THE DRAWINGS

Additional characteristics, objects and advantages of the present invention are made more evident and easily understood according to perusal of the following detailed description of exemplary embodiment(s) in conjunction with accompanying drawings, wherein:
FIG. 1 illustrates a flow chart of an embodiment of the text input method according to the present invention;
FIG. 2 illustrates a diagram of a screen displaying keywords in a special manner in an embodiment of the text input method according to the present invention;
FIG. 3 illustrates a diagram of a screen after entry into a function module in an embodiment of the text input method according to the present invention;
FIG. 4 illustrates a diagram of function modules that may be available;
FIG. 5 illustrates a diagram of a screen displaying a text message in which content from a function module is added in an embodiment of the text input method according to the present invention;
FIG. 6 illustrates a structural diagram of an embodiment of a text input system according to the present invention.
FIG. 7 illustrates a structural diagram of an embodiment of an extracting module in a text input system according to the present invention;
FIG. 8 illustrates a structural diagram of another embodiment of the text input system according to the present invention;
FIG. 9 illustrates a structural diagram of an embodiment of a text input device according to the present invention.

The same or similar reference signs in the drawings denote same or similar elements.

### DETAILED DESCRIPTION OF THE INVENTION

The objectives, technical solutions and advantages of the present invention are made more evident according to the following detailed description of exemplary embodiments in conjunction with the accompanying drawings.

Embodiments of the present invention are to be described here below, and the examples of the embodiments are shown in the drawings, wherein same or similar reference signs in the drawings denote same or similar elements. It should be appreciated that the embodiments described below in conjunction with the drawings are illustrative and are provided for explaining the prevent invention only, thus shall not be interpreted as limitations to the present invention.

Various embodiments or examples are provided here below to implement different structures of the present invention. To simplify the disclosure of the present invention, description of components and arrangements of specific examples is given below. Of course, they are illustrative only and not limiting the present invention. Moreover, in the present invention, reference numbers and/or letters may be repeated in different embodiments. Such repetition is for purposes of simplification and clarity, yet does not denote any relationship between respective embodiments and/or arrangements being discussed. It should be noted that components illustrated in the drawings may not be drawn to scale. Description of conventional components, processing technology and crafts are omitted herein in order not to restrict the present invention unnecessarily.

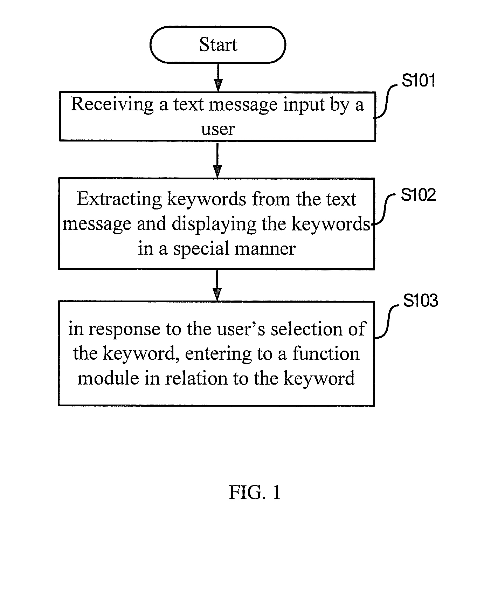

As shown, FIG. 1 illustrates a flow chart of an embodiment of the text input method according to the present invention, which comprises steps S101-S103. Here below, the method illustrated in FIG. 1 is to be described with reference to the embodiment.

At step S101, text message input by a user is received.

The text message may be one or more word(s) or a sentence or a paragraph. In addition to Chinese character input, the method also supports input of many other languages. For example, " 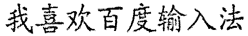 " like Baidu input method editor' [in Chinese]), 'weather report', and " 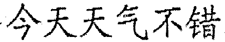 " (`the weather today is good' [in Chinese]).

At step S102, keywords are extracted from the text message and displayed in a special manner. Keywords may be those defined by users in advance. For example, words/phases such as weather, time and/or name of places may be defined as keywords. For example, when the text message received at step S101 reads 'The weather is good, let's to shopping this afternoon', the word 'weather' will be extracted as a keyword from the text message for the reason that the word 'weather' is one of the keywords that have been defined in advance. For the purpose of distinction, keywords are usually displayed in a special manner, wherein displaying in a special manner includes but is not limited to displaying in highlight, reverse type, different colour and/or displaying differently from other words than the keywords.

Preferably, the text message is retrieved and matched against the keywords in a keyword corpus. As compared to the practice of users themselves defining words relevant to themselves or words they frequently use as keywords, the use of the keyword corpus as a reference at the time of extracting keywords is more comprehensive, convenient and accurate. Keywords in the keyword corpus come from various sources, which may be a glossary of keywords frequently used by users, extract of new words on the Internet, and/or definitions made by users themselves. Accordingly, the use of the keyword corpus can collect keywords that a majority of users use and is also capable of accommodating retrieval of personalized keywords at the meantime.

For example: when the text message received at step S101 reads: 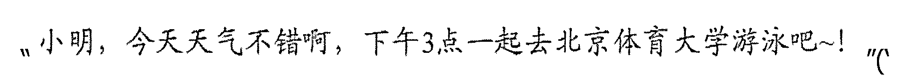 Xiaoming, the weather today is good; let's go swimming at the Beijing Sport University at 3 o'clock this afternoon' [in Chinese]), then the message is first processed through word segmentation, which may be any word segmentation process that is currently available in the prior art; the process of word segmentation results in such a text message as 'Xiaoming| the weather| today| is good| let's| go| swimming| at Beijing| Sport| University| at 3 o"clock| this afternoon|', or such a text message as |Xiaoming| the weather| today| is good| let's| go| swimming| at Beijing| Sport University| at 3 o'clock this afternoon|', or alternatively, 'Xiaoming| the weather| today| is good| let's| go| swimming| at Beijing Sport University| at 3 o'clock| this afternoon|'. Preferably, words and phrases resulted from various word segmentation processes are all to be retrieved and matched with words in the keyword corpus.

If the keyword corpus contains a word that matches with a word in the text message, then the word is extracted as a keyword. The retrieving and matching process results in such five keywords as 'Xiaoming', 'weather', '3 o'clock this afternoon', 'Beijing Sport University' and 'swimming'.

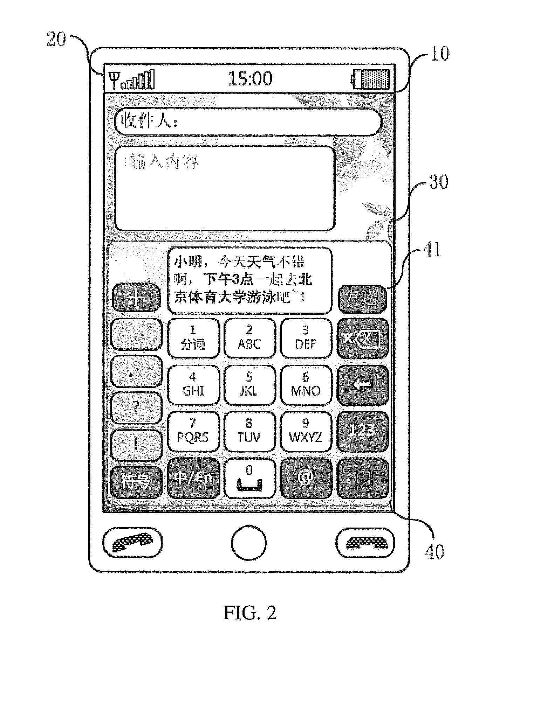

The keywords are displayed in a special manner, as shown in FIG. 2; the keywords that have been extracted are displayed in a manner different from that in which words other than keywords are displayed. FIG. 2 illustrates a diagram of a screen, on which keywords are displayed in a special manner, of a smart phone equipped with a number keyboard, which is taken as an example. The home screen 10 of a mobile phone would display a mobile phone status bar 20 and content display interface 30. The mobile phone status bar 20 may be status display of universal applications for any mobile phone. For example, the mobile phone status bar 20 may include display of signals, battery, time, mobile phone service carrier and personalized phone signature. The content display interface 30 is associated with operation of the current application. FIG. 2 illustrates a diagram of an interface at the time when text input is required, underneath which is a number keyboard panel 40.

The keyboard panel 40 further comprises a discrete tool area having at least one self-defined function and comprising commonly used buttons such as letter buttons, symbol buttons, input mode shift button, space button ad backspace button. In addition, the keyboard panel 40 further comprises a message display area 41. The message display area 41 displays a message edited by using the number keyboard. Users can edit text displayed in the message display area 41 as desired and click the send button to send the message after finishing editing.

As shown in FIG. 2, the font of words other than the keywords as displayed in the message display area 41 is font Song, whilst keywords are displayed in bold black for the purpose of distinction. Optionally, the keywords may be displayed using different font size, font colour, brightness, etc.

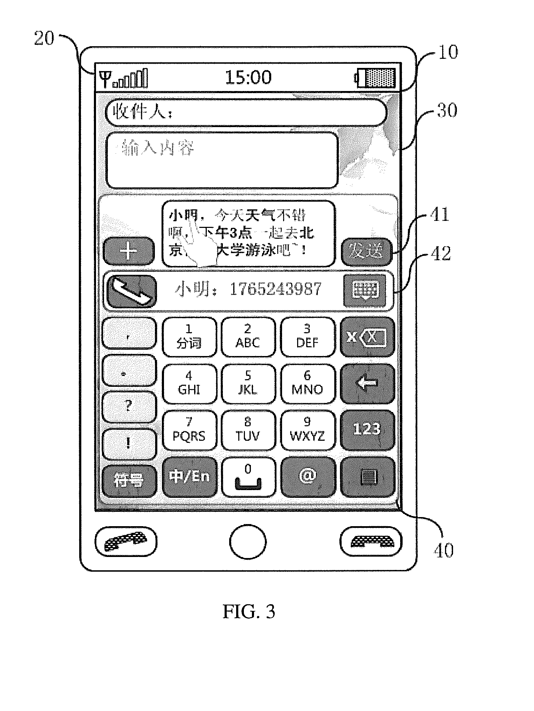

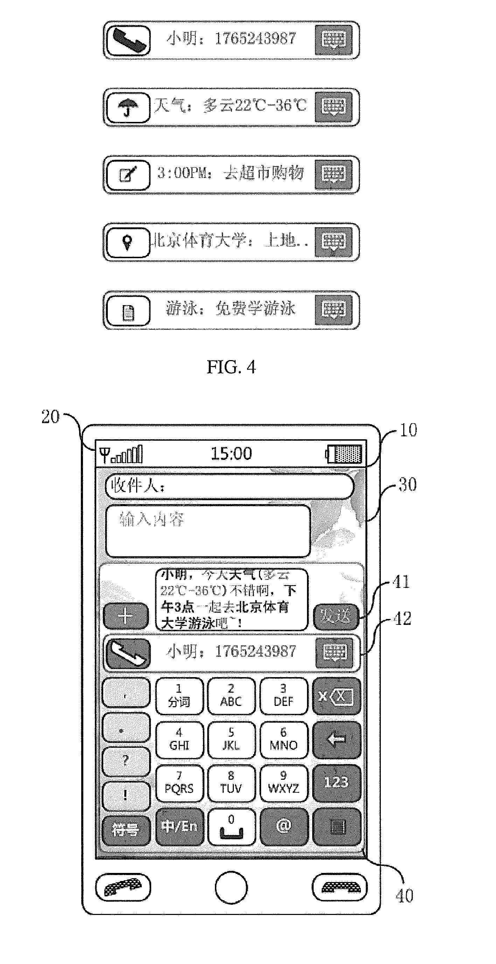

Next, in response to a user's selection of the keyword, step S103 is implemented to enter into a function module in relation to the keyword. Turn to FIG. 3, a function module 42 is displayed underneath the message display area 41, wherein the function module 42 is the contact information of " 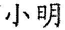 " ("Xiaoming" [in Chinese]) saved in the contact list. When a user selects the keyword 'Xiaoming', the nature of which is a person's name, then the function module 42 area presents the contact list icon, searches for relevant information in the database of the contact list on the basis of the keyword 'Xiaoming' via the contact list interface, and returns the search result to the function module 42 area for display. The contact list database connected to the contact list interface may be a contact list database located on a mobile terminal or may be a contact list database located on an Internet server. The function module 42 includes but is not limited to: contact list, weather forecast, time, memo, map and/or Internet explorer. Turn to FIG. 4, which illustrates diagrams of five possible function modules 42. When a user touches on a different keyword, a corresponding function module 42 appears underneath the message display area 41. It is understandable that, as shown in FIG. 3, it is merely an example that the function module 42 is located underneath the message display area 42; rather, the function module 42 may be located at any area on the screen of a mobile phone as long as that does not affect other functions of the mobile phone.

In addition to conducting a search on the basis of the keyword selected by a user at the time of making a search in a database via an interface of the function module 42, the search results are sorted in a sequence in conjunction with the context of the content input by the user, and the most relevant search results are displayed in the function module 42 area.

At the time when a user makes input via the keyboard panel 40 but has yet not selected any keyword, the message display area 41 presents content that has been input and keywords that have been matched, and the function module 42 area automatically presents a function module in relation to a keyword that is last matched, and presents information that has been retrieved via an interface of the function modules on the basis of the keyword that is last matched. For example, when a user inputs 'Xiaoming, the weather today is good, at 3 o'clock this afternoon', wherein the keyword that is last matched is '3 o'clock this afternoon', then the function module 42 area presents such a schedule as "3:00PM: 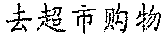 " ('3:00PM: go shopping in supermarket' [in Chinese]), and then the user may immediately notice there is a clash of time for an activity arranged previously, and may instantly change the time proposed in the text message.

Preferably, in response to a user's selection of the keyword, an application interface comprising a function module in relation to the keyword is provided for the user. For example, if the text message received contains words and phrases associated with economic financial figures such as interest, earning and the like, the application interface of a calculator is provided for the user.

In response to the user's selection of the application interface, the user enters into the function module in relation to the keyword. Optionally, if the function module is provided via the Internet, the user is asked whether to access the Internet in response to the user's selection of the keyword. For example, when the function module that provides the function of a calculator is provided via the Internet, a dialogue window pops on the screen asking if the user would like to access the Internet; if the user selects to access the Internet, then the Internet is accessed to enter into the corresponding function module.

Optionally, after entry into the function module in relation to the keyword, and in response to selection of content in the function module, the content is added into the text message which has been input by the user. The content includes: text, image, website address, audio track and/or video.

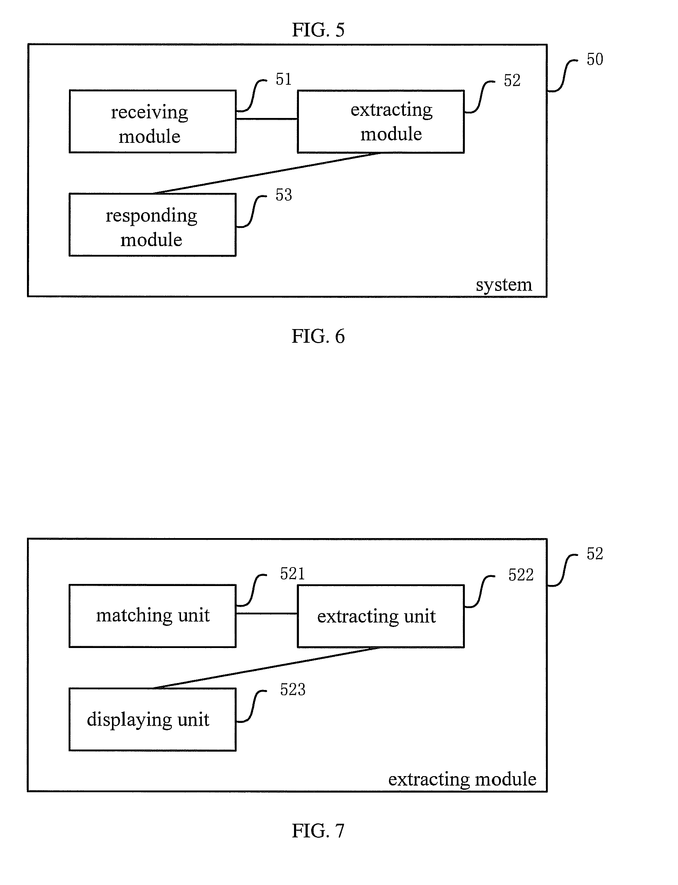

Turn to FIG. 6, which illustrates a structural diagram of an embodiment of a text input system 50 according to the present invention. The system 50 comprises: a receiving module 51, an extracting module 52 and a responding module 53.

The receiving module 51 is disposed to receive text messages that are input by users. The text message may be one or more word(s) or a sentence or a paragraph. In addition to Chinese input, the system further supports input of many other languages. For example, " 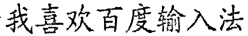 " ('I like Baidu input method editor' [in Chinese]), 'weather report', and " 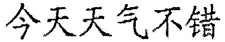 " ('the weather today is good' [in Chinese]) .

The extracting module 52 is disposed to extract keywords from the text message and to display the keywords in a special manner. Keywords may be those defined by users in advance. For example, words and phases associated with weather, time and/or name of place may be defined as keywords. For example, when the text message received by the receiving module 51 is 'The weather is good, let's to shopping this afternoon', the word 'weather' will be extracted as a keyword from the text message for the reason that the word 'weather' is one of the keywords that have been defined in advance. For the purpose of distinction, keywords are usually displayed in a special manner, wherein displaying in a special manner includes but is not limited to display in highlight, reverse type, different colour and/or displaying differently from other words than the keywords.

Preferably, the extracting module 52 comprises a matching unit 521, an extracting unit 522 and a displaying unit 523. The matching unit 521 is disposed to retrieve and match keywords extracted from the text message in a keyword corpus. As compared to the practice of users themselves defining words associated with themselves or words they frequently use as keywords, the use of a keyword corpus as a reference at the time of extracting keywords is more comprehensive, convenient and accurate. Keywords in the keyword corpus come from various sources, which may be a glossary of keywords, extract of new words on the Internet, and/or definition made by users themselves. Accordingly, the use of the keyword corpus can collect keywords that a majority of users use and also accommodate to retrieval of personalized keywords at the meantime.

For example, if the text message received by the receiving module 51 reads: " 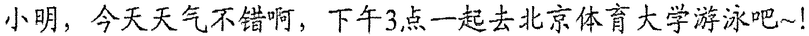 " ('Xiaoming, the weather today is good; let's go swimming at the Beijing Sport University at 3 o'clock this afternoon' [in Chinese]), then the matching unit 521 processes the message through word segmentation, which may be any word segmentation process that is currently available in the prior art; the process of word segmentation results in such a text message as 'Xiaoming| the weather| today| is good| lets| go| swimming| at Beijing| Sport| University| at 3 o'clock| this afternoon|', or such a text message as |Xiaoming| the weather| today| is good| let's| go| swimming) at Beijing| Sport University| at 3 o'clock this afternoon|', or alternatively, 'Xiaoming| the weather| today| is good| let's| go| swimming| at Beijing Sport University| at 3 o"clock| this afternoon|'. Preferably, phrases resulted from various word segmentation processes are all to be retrieved and matched with words in the keyword corpus.

When the keyword corpus contains a word/phrase that matches with a word in the text message, then the word is extracted as a keyword. The retrieval and matching process results in such five keywords as 'Xiaoming', 'weather', '3 o'clock this afternoon', 'Beijing Sport University' and 'swimming'.

Next, the displaying unit 523 displays the keywords in a special manner; as shown in FIG. 2, the keywords extracted are displayed in a font that is different from that of other words. As shown in FIG. 2, the font of words other than the keywords as displayed in the message display area 41 is font Song, whilst keywords are displayed in bold black for the purpose of distinction. Optionally, the keywords may be displayed using different font size, font colour, brightness, etc.

A responding module 53 is disposed to respond to a user's selection of keywords and to enter into a function module in relation to the keywords. The function module includes but is not limited to: contact list, weather forecast, time, memo, map and/or Internet explorer.

Preferably, the responding module 53, in response to user's selection of the keywords, further provides application interfaces comprising function modules in relation to the keywords for the user. For example, if the text message received contains words associated with economic financial figures such as interest, earning and the like, the application interface of a calculator is provided for the user. Then, in response to the user's selection of the application interface, the function module in relation to the keyword is entered.

Optionally, if the function module is provided via Internet, the responding module 53 is disposed further, in response to a user's selection of keywords, to enquire whether the user would like to access the Internet. For example, when the function module that provides the function of a calculator is provided via the Internet, a dialogue window pops on the screen asking if the user would like to access the Internet; if the user selects to access the Internet, then the Internet is accessed to enter into the corresponding function module.

Optionally, the system further comprises a content adding module 54. The content adding module 54 is provided, after entry into the function module in relation to the keyword and in response to the user's selection of content in the function module, to add the content to the text message that the user has input. The content includes: text, image, website address, audio track and/or video.

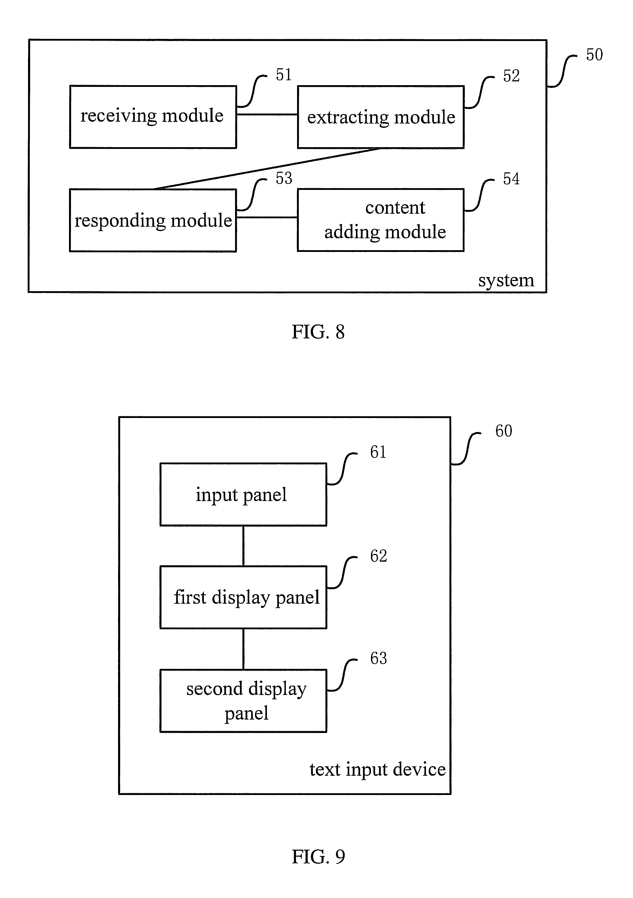

Turn to FIG. 9, which illustrates a text input device 60 comprising: an input panel 61, a first display panel 62 and a second display panel 63.

The input panel 61 provides an input area for users. The input area comprises: a handwriting panel, a number keyboard, a full keyboard panel and/or a character stroke panel.

The first display panel 62 is disposed to display text messages input by users. Keywords in the text messages are displayed in a special manner. Displaying in a special manner includes: display in highlight, reverse type, different colour and/or display different from that of non-keywords.

The second display panel 63 is disposed to display shortcut icons of function modules in relation to the keywords. Optionally, the second display panel 63 is disposed to further display the content of the function module when the user makes a selection of the shortcut icons. The function module includes: contact list, weather forecast, time, memo, map and/or Internet explorer.

The use of the method, system and device of the present invention enables users to search for additional information during the input process with convenience, and significantly improves user experience.

Those skilled in the art would readily appreciate that it is evident that the present invention is not limited to details described in the abovementioned specific exemplary embodiments; rather, the present invention can be realized in other specific manners without departing from the spirit and fundamental characteristics of the present invention. Therefore, in all circumstances, the embodiments should be perceived merely as exemplary rather than limitations. The invention is limited only by the accompanying claims instead of the above description and, any alternation and modification of meanings and scopes of equivalent key elements that fall into the scope of the claims are within the scope of the present invention. Any reference sign contained in the accompanying claims should not be regarded as a limiting to the claims. Additionally, it is evident that the word 'comprise/comprising' does not exclude the presence of other modules or steps, and the singular reference does not exclude a plurality.

## Claims

1. A text input method comprising:
receiving a text message input by a user;
extracting keywords from the text message and displaying the keywords in a special manner; and
in response to the user's selection of the keyword, entering into a function module in relation to the keyword.

2. The method according to claim 1, wherein extracting keywords from the text message and displaying the keywords in a special manner further comprising:
retrieving and matching the text message in a keyword corpus;
when the keyword corpus contains words matching a word in the text message, extracting the word as a keyword; and
displaying the keyword in a special manner.

3. The method according to claim 1, wherein, in response to the user's selection of the keyword, entering into a function module in relation to the keyword further comprises:
in response to the user's selection of the keyword, providing an application interface comprising a function module in relation to the keyword for the user; and
in response to the user's selection of the application interface, entering into the function module in relation to the keyword.

4. The method according to claim 1, wherein, further comprising:
after entering into the function module in relation to the keyword, in response to the user's selection of the content in the function module, adding the content into the text message that the user has input.

5. The method according to claim 4, wherein the content includes: text, image, website address, audio track and/or video.

6. The method according to claim 1, wherein, when the function module is provided via the Internet, enquiring the user whether to access the Internet in response to the user's selection of the keyword; and
when the user selects to access the Internet, entering into the function module in relation to the keyword.

7. The method according to any one of claims 1-6, wherein, displaying in a special manner comprises: displaying in highlight, reverse type, different colour and/or displaying differently from other words than the keywords.

8. The method according to claim 7, wherein the function module includes: contact list, weather forecast, time, memo, map and/or Internet explorer.

9. A text input system comprising:
a receiving module for receiving a text message input by a user;
an extracting module for extracting keywords from the text message and displaying the keywords in a special manner; and
a responding module for responding to the user's selection of the keyword, and entering into a function module in relation to the keyword.

10. The system according to claim 9, wherein, the extracting module further comprises:
a matching unit for retrieving and matching keywords extracted from the text message in a keyword corpus;
an extracting unit for, when the keyword corpus contains words matching with a word in the text message, extracting the word as a keyword; and
a displaying unit for displaying the keywords in a special manner.

11. The system according to claim 10, wherein, the responding module is disposed further:
in response to the user's selection of the keyword, to provide a application interface comprising a function module in relation to the keyword for the user; and
in response to the user's selection of the application interface, to enter into the function module in relation to the keyword.

12. The system according to claim 9, wherein further comprising:
a content adding module for, after entry into the function module in relation to the keyword, and in response to the user's selection of content in the function module, adding the content to the text message that the user has input.

13. The system according to claim 12, wherein the content includes: text, image, website address, audio track and/or video.

14. The system according to claim 9, wherein, when the function module is provided via the Internet, the responding module is disposed further, in response to the user's selection of the keyword, to enquire the user whether to access the Internet; and
when the user selects to access the Internet, to enter into the function module in relation to the keyword.

15. The system according to any one of claims 9-14, wherein, displaying in a special manner comprises: displaying in highlight, reverse type, different colour and/or displaying differently from other words than the keywords.

16. The system according to claim 15, wherein, the function module includes: contact list, weather forecast, time, memo, map and/or Internet explorer.

17. A text input device comprising:
an input panel for providing an input area for users;
a first display panel for displaying a text message input by a user, wherein keywords in the text message are displayed in a special manner; and
a second display panel for displaying shortcut icons of function modules in relation to the keywords.

18. The device according to claim 17, wherein the second display panel is disposed further:
when the user makes a selection of the shortcut icons, to conduct a search via the application interface associated with the function module and to present information in relation to the keyword to the user.

19. The device according to claim 17, wherein, the second display panel is disposed further: when the user selects different keyword in the first display panel, to present a shortcut icon of the function module in relation to the selected keyword.

20. The device according to claim 17, wherein, the second display panel is disposed further: when the user does not select any keyword in the first display panel, to present a shortcut icon of a function module in relation to the keyword that has been last input.
